# EUROPEAN PATENT SPECIFICATION

(11) **EP 3 179 452 B1**
(45) Date of publication and mention of the grant of the patent: **09.09.2020**
(21) Application number: 14875884.0
(22) Date of filing: 20.08.2014
(51) Int. Cl.: G07C 9/00, E06B 11/08, G09G 3/00, G08B 6/00, G06T 7/20, G01B 11/14, G01B 15/00, G01B 17/00

(54) **SYSTEM AND METHOD FOR CONTROLLING AND MONITORING ACCESS TO RESTRICTED AREAS**
VORRICHTUNG UND VERFAHREN ZUR KONTROLLE UND ÜBERWACHUNG DES ZUGANGS ZU EINGESCHRÄNKTEN BEREICHEN
SYSTÈME ET PROCÉDÉ DE CONTRÔLE ET DE SURVEILLANCE POUR ACCÈS À UNE ZONE RÉGLEMENTÉE

(30) Priority: 08.08.2014 BR 102014196250
(43) Date of publication of application: 14.06.2017
(73) Proprietor: Digicon S.A. Controle Eletrônico para Mecânica, 94045420 Gravataí (BR)
(72) Inventor: ELBLING, Peter Richard, 91330-180 Porto Alegre - RS (BR); ARAND, Mário, 94015-610 Gravataí - RS (BR)
(74) Representative: Oliveira Lourenço, Nuno Miguel
(86) International application number: PCT/BR2014/000291
(87) International publication number: WO 2016/019444

(56) References cited:
- EP-A1- 2 390 845
- EP-A1- 2 395 451
- EP-A2- 1 130 549
- WO-A1-2005/015507
- WO-A1-2013/135922
- WO-A1-2013/135922
- WO-A2-98/08208
- CN-A- 103 295 301
- FR-A1- 2 739 203
- JP-A- 2006 209 728
- JP-A- 2011 164 945
- US-A- 4 849 737
- US-A- 5 845 692
- US-A1- 2006 101 716
- US-A1- 2010 245 087
- US-B1- 6 967 674
- US-B2- 7 331 522

## Description

### FIELD OF THIS INVENTION

This invention describes a control and monitoring system and method for access to a restricted area, such as mass transit systems (metro stations, train stations, airports, ports and others), commercial buildings, schools, factories, data centers and other places where the movement of people into restricted areas must be controlled. It more specifically comprises a monitoring and access control system with a processing unit which receives information from a user authentication unit and an image capture device and in turn activates one or more bars of luminous elements arranged in barriers which limit a Gated Area. Each user category (Authorized User, Unauthorized User or Special User) is associated with an indicative window of a specific and programmed color that accompanies the movement of the user within the Gated Area, facilitating the action of security agents with regard to visual identification and eventual approach to an Unauthorized User and permission to entry into the Restricted Area for Authorized and Special Users.

### BACKGROUND OF THIS INVENTION

In applications requiring the control of the flow of people, multiple ways of validating or preventing unauthorized access are used. The most common are blocking devices known as turnstiles consisting of mechanical arms arranged in angles of 90° (four arms) or 120° (three arms). In this case, users interact physically with the arms, pushing them so the device can rotate to allow passage of the user through the turnstile, if properly validated. The turnstile can either be rotated physically by the user or can be rotated by a motorized mechanism installed in the turnstile. If the passage is not validated, the turnstile mechanism blocks the rotation of the arms thereby impeding the passage of an Unauthorized User.

Document US2006101716 describes an automatic gate that allows or prevents access to a restricted area or to a transport vehicle. Said automatic gate is equipped with flaps rotating between a closed position, in which the flap forms a barrier preventing the passage of an unauthorized user, and an open position allowing the passage of a person who has been validated through the insertion of a ticket in an authentication device. Such automatic gates dispense the physical interaction of the user with the blocking device.

In these state of the art solutions, where the user's physical contact with the equipment is not necessary, the activation of sliding doors or flaps, for blocking or allowing users' access to a restricted area, is usually performed by infrared optical sensors monitoring the user's passage, sending this information to a processing unit which in turn opens the doors or flaps when the passage is validated or maintaining them closed when not validated.

Document CN103295301 describes an access control system equipped with an identification module that includes an infrared sensor, which identifies the user when approaching a gated area.

In the case of devices in which the user does not have physical contact with the equipment, two main characteristics are explored: the blockage of passage of users without permission and the monitoring of "tailgate" or "piggy-back" users, that is, those who follow closely behind a user with authorized access to gain unauthorized entry to a restricted area.

When an unauthorized user enters together with an authorized user, the system detects the unauthorized user and automatically activates the blocking elements or mechanism, sometimes even preventing the entry of authorized users, which may even have been overtaken by the unauthorized user. The closure of the blocking mechanism is normally accompanied by sonorous alarms and/or visual warnings, which in turn trigger security teams. However, in some circumstances, security personnel cannot quickly and accurately identify the unauthorized user.

Document WO2013135922 describes an access control device applicable to equipment with a barrier in order to detect the passage of unauthorized users, taking advantage of the valid access of an authorized users (i.e. in this case, unauthorized users are "tailgaters" or "piggy-backers). This device comprises a people counting sensor, sonorous and visual alarms, and a means for spraying a dye or powder on the unauthorized user, where such spray or dye can be easily removed or cleaned.

Document CN101847278 describes a system and a method for adjusting the level of safety and signaling in controlled areas in order to detect the presence of one or more individuals to determine if a user is an authorized or unauthorized individual, or an intruder.

Document US5845692 describes an access system that allows the passage of authorized individuals through a door and where unauthorized individuals are prevented from reaching the restricted area by being automatically redirected to an unrestricted area for further processing. Such procedure avoids activating the blocking device thereby maintaining the flow of authorized individuals. The system includes visual and sonorous alarms.

Document JP2006209728 describes a device for detection of unauthorized entry and a detection method to prevent the unauthorized entry of an unauthorized person accompanying a person with authorized permission (i.e. "tailgaters" or "piggy-backers"). In this entry control system, an individual authentication device is installed in an authentication room closed by a first door allowing entry from the outside and a second door allowing entry to the control section, and opening/closing of the second door is controlled on the basis of a collation result by the individual authentication device to prevent the unauthorized entry to the control section. The entry control system controlling the entry to the control section has: a camera installed in the upper part (ceiling) of the authentication room installed with the authentication device; an unauthorized entry detection device performing image processing on the basis of a video of the whole inside of the authentication room photographed by the camera, and deciding "absence", "authorized entry", or "unauthorized entry", for a state inside the authentication room; and a controller controlling the opening/closing of the first door and the second door on the basis of a decision result of the unauthorized entry detection device and the collation result of the individual authentication device.

Document EP2390845 discloses an access system for airport security checkpoints, having a camera that captures passenger images, and a display and speakers guiding a passenger during authentication.

Therefore, state of the art access control systems feature visual and/or sonorous alarms to alert the entry or attempted entry of unauthorized users in the restricted area, or the attempt of entry by "tailgate" or "piggy-back" users (those who are not authorized to enter, but attempt to do so by closely following an authorized user). However, these state of the art systems do not visually follow the user(s) movement within a gated area (i.e. the movement between the authentication device and the blocking device), so it is not possible to precisely identify the unauthorized user(s) who is (are) within the gated area.

Furthermore, state of the art access control systems identify the user's category only at the authentication device, so that authorized users with a special condition (such as, but not limited to, senior citizens, handicapped users, users exempt from payment, students, users with different fare conditions, visitors, third party workers, service providers, amongst others) are not precisely identified as they move within the Gated Area, resulting in attendance delays by security personnel, slow downs in the flow, and sometimes stoppage of flow at the blocking device.

Thus, this invention has as an object a Control and Monitoring System and Method for Access to a Restricted Area with a Gated Area prior to the Restricted Area. A user authentication module or device is placed at the entrance of the Gated Area which sends authentication and user category (Authorized User, Unauthorized User or Special User) data to a processing unit which in turn triggers the creation of an indicative window composed of luminous elements situated on barriers where such indicative windows have unique colors associated with each user category. This indicative window follows the movement of each user within the Gated Area, based on information captured by an image capture device and processed by a processing unit. If more than one user is in the Gated Area, each individual user will have a corresponding indicative window for that user's category. The indicative window(s) signal(s) to security agents a possible incident so that action may be taken. The imaging device constantly identifies the presence of one or more users within the gated area, transferring this information to the processing unit, which calculates the users' position, speed and direction of movement, and in turn controls the closing or opening speed of a blocking device in proportion to the speed, location and direction of movement of Unauthorized Users, resulting in partial or total closure or partial or total opening of the blocking device.

### SUMMARY

The invention provides a monitoring and control system and method for access to restricted areas, according to independent claims 1 and 7, while optional embodiments are set out by the dependent claims.

The disclosure features an electronic processing unit connected to a user authentication device that authenticates, or not, a user and determines a user category for that user. This information is sent to the processing unit which in turn activates luminous elements arranged in the barriers of a Gated Area, creating visual indicative windows of the user category (Authorized User, Unauthorized User and Special User) that follow the movements of the corresponding user within the Gated Area. At the end of the Gated Area, and just before the entrance to the Restricted Area, is a blocking device, which is controlled by the processing unit to open or close, fully or partially.

The disclosure provides a control and monitoring system and method for access to a restricted area which features an Image Capture Device with an imaging range defined by an Imaging Area which monitors a user's presence within the Gated Area and sends this information to a processing unit which calculates the location, speed and direction of movement of the user within the Gated Area. Based on the processed information, the processing unit activates an indicative window by way of luminous elements situated in barriers which delimit a Gated Area. Such indicative windows are illuminated in specific colors for each user category (Authorized User, Unauthorized User, and Special User). These indicative windows follow the movement of the respective user within the Gated Area, both towards or away from the Restricted Area, based on constantly updated presence information sent by the image capture device to the processing unit.

The disclosure provides a control and monitoring system and method for access to a restricted area that incorporates a Blocking Device located immediately prior to the Restricted Area, whose partial or complete closing or opening and the speed of such partial or complete closing or opening is controlled by the processing unit, in proportion to the speed of passage, location and direction of movement of a user detected by an image capture device within the Gated Area. Such partial or complete closing or partial or complete opening of the Blocking Device is usually executed for Unauthorized Users as they approach the Restricted Area (partial or complete closing of the Blocking Device) or as they move away from the Restricted Area (partial or complete opening of the Blocking Device). The blocking device is usually kept open for authorized users or special users.

The disclosure provides a control and monitoring system and method for access to a restricted area, which gives every user category (Authorized User, Unauthorized User, Special User), previously identified by the user authentication device, a unique and pre-determined visual identification for that user category, in the form of an indicative window with a specific color for that category of user, composed of luminous elements arranged in the barriers which delimit the Gated Area. Such indicative windows follow the movement of the user within the Gated Area, facilitating the action of security officers by providing accurate visual identification of Unauthorized Users or Special Users, while permitting unhindered entrance to the Restricted Area for Authorized Users and other Special Users.

The disclosure provides a control and monitoring system and method for access to a restricted area, which provides an indicative window consisting of luminous elements arranged in the barriers of the Gated Area that follow the movement of the user within the Gated Area, even in situations where a first user overtakes a second user of the same or a different category, in which case the first user's indicative window transposes the indicative window of the second user being overtaken. In such cases the indicative window of the first user and second user continue to follow the corresponding user even during and after the process of overtaking has occurred.

The invention provides a control and monitoring system and method for access to a restricted area, allowing security officers or gatehouse staff a fast and precise identification and eventual segregation of Unauthorized or Special Users moving through the Gated Area towards the Restricted Area.

### BRIEF DESCRIPTION OF THE FIGURES

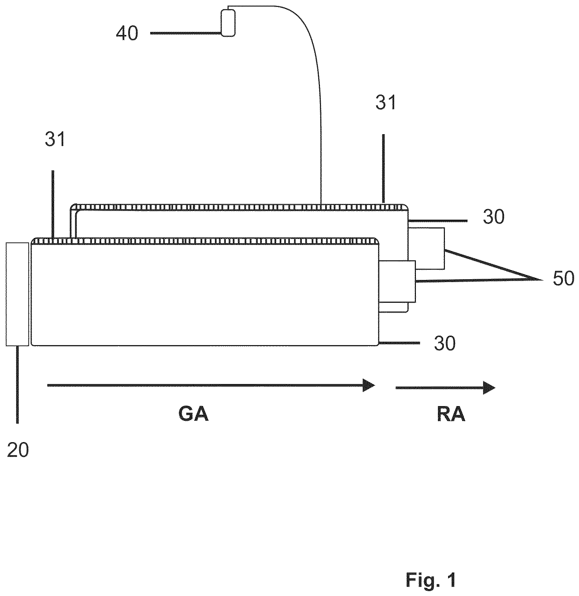

Figure 1 shows a representation of the control and monitoring system and method for access to a Restricted Area (RA), showing the Gated Area (GA) limited by Barriers (30), each Barrier (30) equipped with a Bar of Luminous Elements (31), the User Authentication Unit (20), usually located at the entrance of the Gated Area (GA), the Image Capture Device (40) and the Blocking Device (50), usually positioned at the entrance to the Restricted Area (RA).

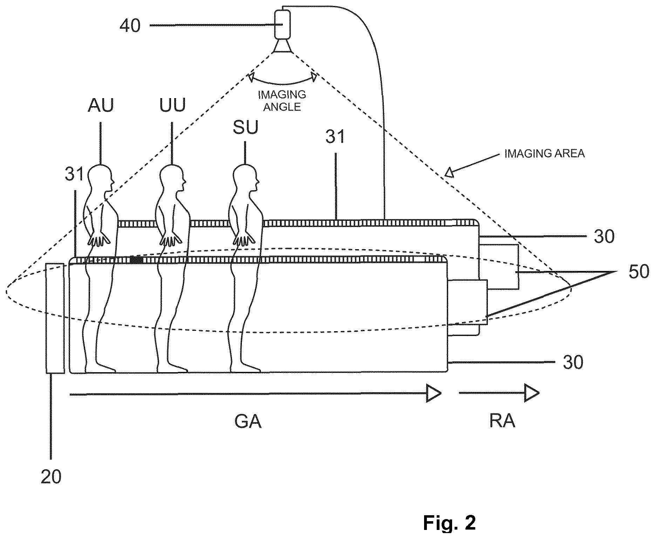

Figure 2 shows a representation of the Imaging Angle and the Imaging Area of the Image Capture Device (40), highlighting the monitoring limits or area, as well as evidencing the movement of an Authorized User (AU), an Unauthorized User (UU), and a Special User (SU) within the Gated Area (GA).

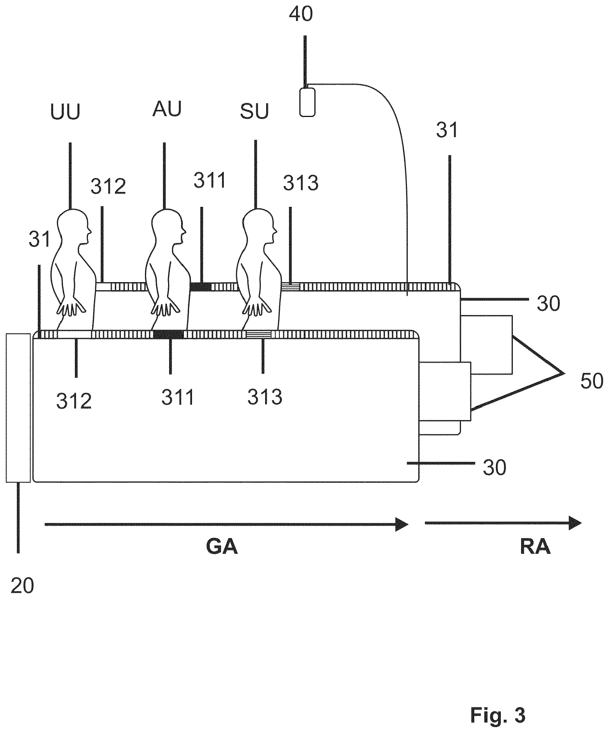

Figure 3 shows the representation of the different types of user categories - Authorized User (AU), Unauthorized User (UU) and Special User (SU) - moving within the Gated Area (GA). Each user category is followed by their respective User Category Window (311 for Authorized Users [AU], 312 for Unauthorized Users [UU], 313 for Special Users [SU]). A specific color can be programmed/attributed to each User Category Window (311, 312, 313) depending on the corresponding user category (AU, UU, SU) moving within the Gated Area (GA).

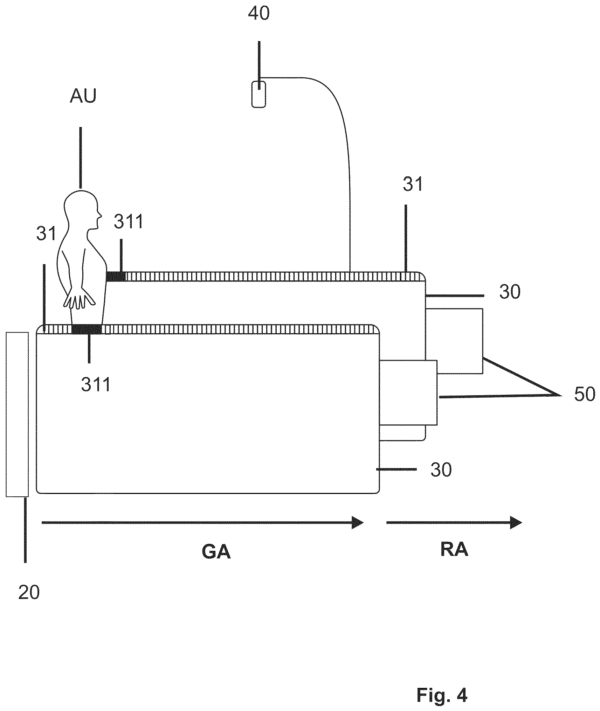

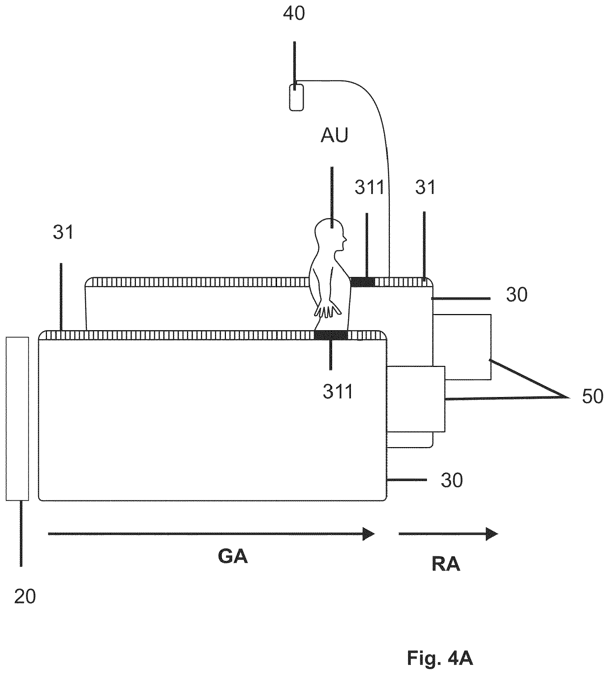

Figure 4 shows the representation of the movement of an Authorized User (AU) entering the Gated Area (GA), after authorization by a User Authentication Unit (20), with his/her respective User Category Window (311) shown in the color programmed/attributed to identify an Authorized User (AU). Figure 4A shows the Authorized User (AU) leaving the Gated Area (GA) and entering the Restricted Area (RA), with the Blocking Device (50) in the open position thereby allowing entry of the Authorized User (AU) into the Restricted Area (RA). The User Category Window (311) follows the movement of the Authorized User (AU) within the Gated Area (GA) until such Authorized User (AU) exits de Gated Area (GA) by either entering the Restricted Area (RA) or moving backwards beyond the User Authentication Device (20).

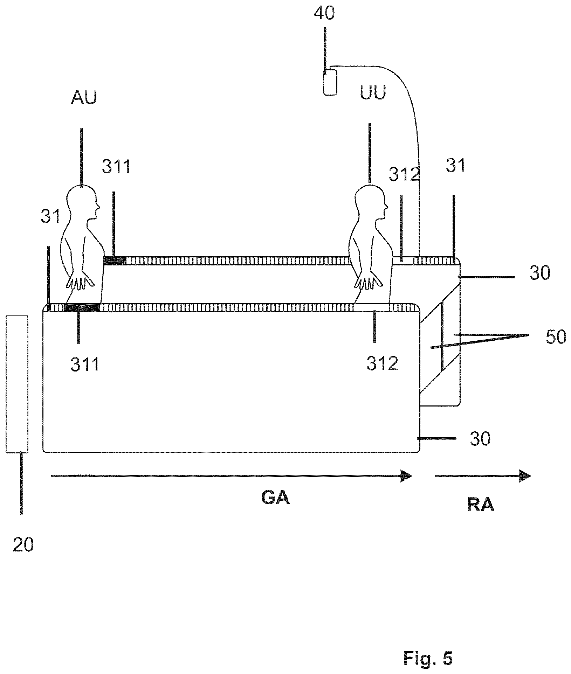

Figure 5 shows the representation of the movement of an Unauthorized User (UU) with his/her respective User Category Window (312) followed by an Authorized User (AU) with his/her respective User Category Window (311) within the Gated Area (GA), with the Unauthorized User (UU) having his/her entry into the Restricted Area (RA) prevented by the Blocking Device (50), here shown in the closed position.

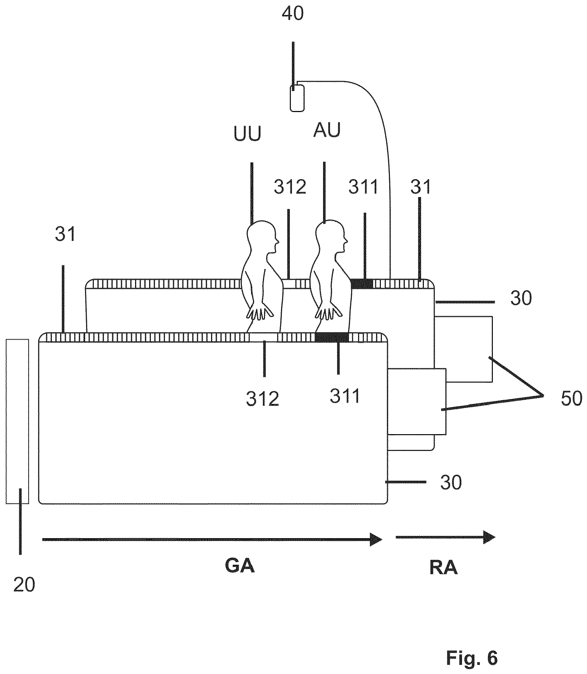

Figure 6 shows an Authorized User (AU) followed by his/her respective User Category Window (311) entering the Restricted Area (RA), with Blocking Device (50) open allowing passage of the Authorized User (AU). Such Authorized User (AU) is trailed by an Unauthorized User (UU) identified with his/her respective User Category Window (312).

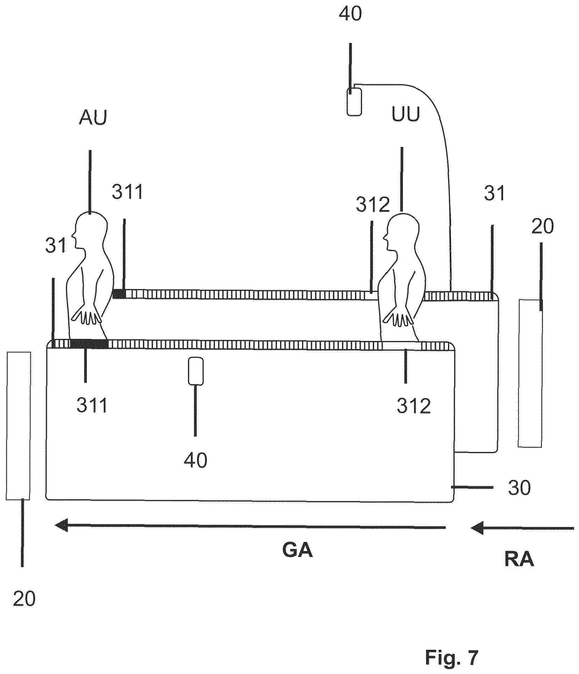

Figure 7 shows the representation of the movement of an Unauthorized User (UU) and of an Authorized User (AU) for a bidirectional Gated Area (GA), evidencing an additional Image Capture Device (40) positioned in the one of the Barriers (30) as well as an additional User Authentication Device (20), this time located at the frontier between the Gated Area (GA) and the Restricted Area (RA).

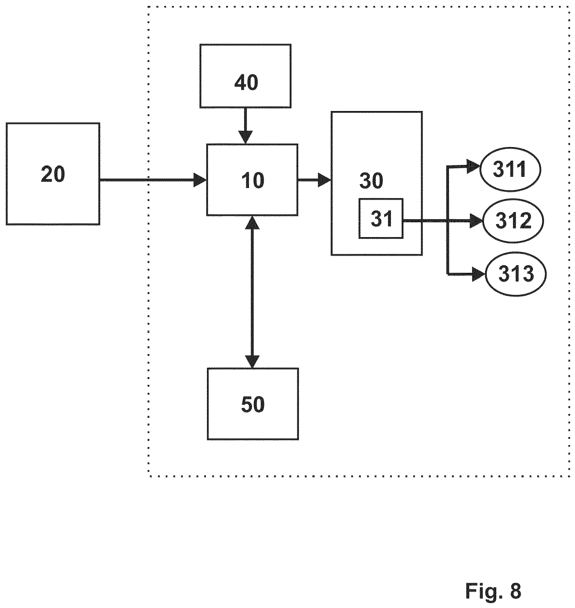

Figure 8 shows the block diagram of the control and monitoring system for access in restricted areas.

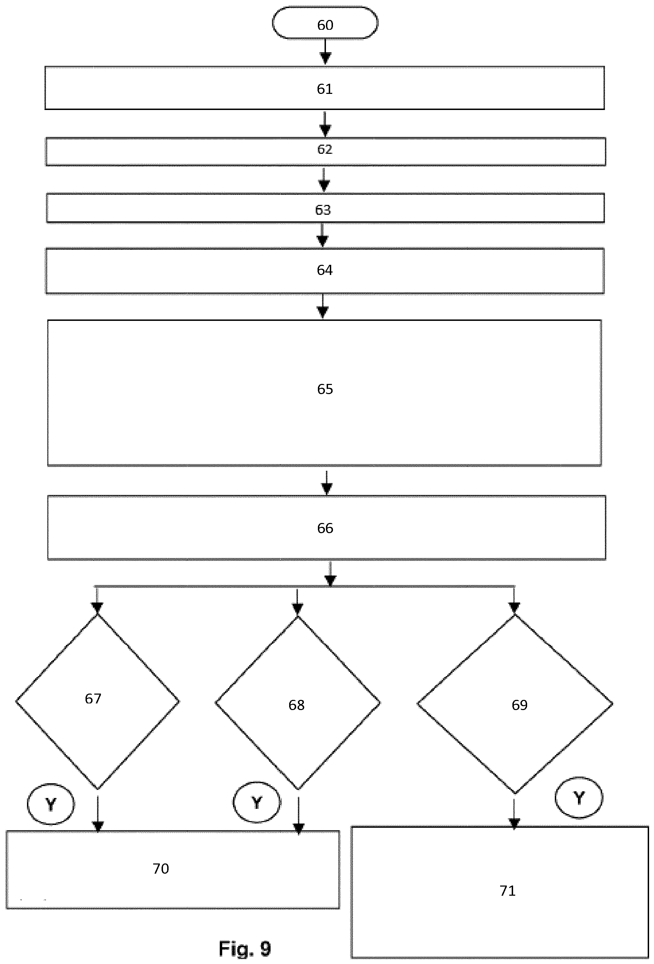

Figure 9 shows the flowchart of the steps in the control and monitoring method for access in restricted areas, wherein:
   60 - START;
   61 - User identifies himself, or not, in the authentication unit (20) at the entrance of the Gated Area (GA);
   62 - The user authentication and user category are sent, or not, to the Processing Unit (10);
   63 - Processing Unit (10) receives, or not, the user authentication and user category;
   64 - Image Capture Device (40) identifies the presence of user(s) within the Gated Area (GA) and sends information to the Processing Unit (10);
   65 - Processing Unit (10) calculates position, speed and direction of movement of user(s). Based on this information, Processing Unit (10) activates a User Category Window (311, 312, 313) in the color stipulated for the user category: Authorized User (AU) with specific User Category Window (311), Unauthorized User (UU) with specific User Category Window (312) and Special User (SU) with specific User Category Window (313). The User Category Windows (311, 312, 313) are formed by Bars of Luminous Elements (31) arranged in the Barriers (30) limiting the Gated Area (GA);
   66 - User Category Window (311, 312, 313) follows the movement of the corresponding user within the Gated Area (GA), based on information received from the Image capture device (40) and processed by the Processing Unit (10);
   67 - User Category Window (311) of the Authorized User (AU) activated?
   68 - User Category Window (313) of the Special User (SU) activated?
   69 - Indicative Window (312) of the Unauthorized User (UU) activated?
   70 - Processing Unit (10) activates maintains the Blocking Device (50) open to allow user passage (AU and SU) into the Restricted Area (RA);
   71 - Processing Unit (10) partially or fully closes Blocking Device (50) as Unauthorized User (UU) moves towards the Restricted Area (RA) OR partially or fully opens Blocking Device (50) as Unauthorized Users (UU) moves away from Restricted Area (RA).

### DETAILED DESCRIPTION OF THE INVENTION

For the purposes of this invention, the following terms are conceptualized:
"Gated Area" (GA) is and area laterally bounded by Barriers (30) each equipped with a Bar of Luminous Elements (31). This Gated Area (GA) is positioned just before a Restricted Area (RA).
"Restricted Area" (RA) comprises an area for access only to Authorized Users (AU) and Special User (SU) previously enrolled in an User Authentication Device (20) located at the entrance of the Gated Area (GA). A Blocking Device (50) can be positioned immediately before the Restricted Area (RA) which allows entry to the Restricted Area (RA) by Authorized Users (AU) and/or Special Users (SU) and prevents access to the Restricted Area (RA) by Unauthorized Users (UU).
"Authorized User" (AU) comprises the user category that is authorized for entry into the Restricted Area (RA). Authorization is given by the User Authentication Device (20), usually located at the entrance of the Gated Area (GA).
"Special User" (SU) comprises an Authorized User that presents a specific condition of access. Examples of such Special Users (SU) include, but are not limited to, senior citizens, handicapped users, user exempt from payment, users with different fare structures, visitors, service providers, and others. Special Users (SU) are authorized by the User Authentication Device (20), usually located at the entrance of the Gated Area (GA), for entry into the Restricted Area (RA). The User Category Window (313) of Special Users (SU) can be programmed/attributed to have a specific color assigned to the Special User (SU) category or, if more detailed identification is necessary, a specific color can be programmed/attributed for each different type (senior citizens, handicapped users, etc.) of Special User (SU), such colors being different from those of Authorized Users (AU) and Unauthorized Users (UU). Such visual identification facilitates the surveillance by the security officer.
"Unauthorized User" (UU) comprises a user not unauthorized by the User Authentication Device (20), usually located at the entrance of the Gated Area (GA), or the user who has not identified himself at the User Authentication Device (20). Unauthorized Users (UU) are not allowed entry into the Restricted Area (RA).
"Imaging Area" comprises the imaging range of the Image Capture Device (40) and is partially defined by the Imaging Angle of the Image Capture Device (40). The Imaging Area includes the Gated Area (GA) and certain adjacencies.

An indicative luminous window marking the category and position of the user within the Gated Area (GA), is in this document referred to as the "User Category Window" (311, 312 or 313), and comprises a window consisting of one or more luminous elements of the Bar of Luminous Elements (31) located on the Barriers (30). The User Category Window (311, 312, 313) follows the displacement of the user within the Gated Area (GA) with the luminous indication of the user category: Authorized user (AU) with User Category Window (311), Unauthorized User (UU) with User Category Window (312), and Special User (SU) with User category Window (313). Each User Category Window (311, 312, 313) has a specific color programmed or attributed to that User Category Window (311, 312, 313).

The control and monitoring system and method for access to a restricted area comprises a Gated Area (GA) before a Restricted Area (RA). This Gated Area (GA) is limited by Barriers (30) with Bars of Luminous Elements (31) that are activated by a Processing Unit (10) that receives, or not, an authentication and user category type from the User Authentication Device (20). The Image Capture Device (40) constantly identifies the presence of the user(s) within the Gated Area (GA) and sends such presence information to the Processing Unit (10) which calculates the location, speed and direction of movement of the user(s) within the Gated Area (GA). In turn, the Processing Unit (10) activates a User Category Window (311, 312, 313) by way of the Bar of Luminous Elements (31) located in the Barriers (30) in a color stipulated for the user category identified by the User Authentication Device (20): Authorized User (AU) with specific User Category Window (311); Unauthorized User (UU) with specific User Category Window (312); and Special User (SU) with specific User Category Window (313). Based on information received from the Processing Unit (10) The User Category Window (311, 312, 313) follows the movement of the corresponding user within the Gated Area (GA), signaling possible incidents to the security agents so that they can take action.

Preferably, the Barriers (30) provided in the Gated Area (GA) allow the unidirectional movement of Authorized Users (AU), Unauthorized Users (UU) and Special Users (SU) towards the Restricted Area (RA), as shown in Figure 2.

A bi-directional user flow can be foreseen by placing a second User Authentication Device (20) at the frontier of the Gated Area (GA) with the Restricted Area (RA) and/or an Image Capture Device (40) to configure the corresponding User Category Windows (311, 312 or 313), as shown in Figure 7.

The Bar of Luminous Elements (31) can be equipped with light-emitting diodes (LEDs); laser beams; lamps; or luminous displays such as LCDs *(Liquid Crystal Displays),* plasma, LED, or similar.

The User Category Window (311, 312, 313) moves parallel and together with the movement of the corresponding user within the Gated Area (GA). When a first user overtakes a second user, the first user's User Category Window also overtakes the second user's User Category Window, so that both users' User Category Windows (311, 312, 313) continue aligned with the movement of the respective users, during and after the process of overtaking.

When an Authorized User (AU), Unauthorized User (UU) or Special User (SU) located within the Gated Area (GA) overtakes, by moving forwards or backwards within the Gated Area (GA), any other user (AU, UU or SU), also located within the Gated Area (GA), the corresponding User Category Windows (311, 312, 313) of the overtaking user and that of the overtaken user will continue to follow the corresponding user which has overtaken and the user which has been overtaken, both during and after overtaking has occurred.

The User Authentication Device (20) includes any state of the art device, whose function is the identification of a user, by such means as biometric identification elements (as, for example, iris recognition, facial recognition, fingerprint recognition, finger or palm veins, among others) or non-biometric identification methods (such as badges with magnetic stripe or barcode, including those known as 2D, punch cards, radio-frequency cards, smartcards, among others).

The Image Capture Device (40) monitors and records the presence of static and dynamic objects within the Imaging Area and communicates with the Processing Unit (10), sending data that enables the Processing Unit (10) to calculate the position, speed and direction of movement of one or more users (AU, UU or SU) located within the Gated Area (GA). The result of such calculations is the data needed to activate the Bar of Luminous Elements (31) with the appropriate User Category Window (311, 312 and 313) which follow the corresponding user (AU, UU, SU) as he/she moves within the Gated Area (GA). The Processing Unit (10) can, optionally, provide additional electronic information, such as flow intensity, time of entrance into e out of the Gated Area (GA), user dwell time, etc.

The Image Capture Device (40) can be any device that recognizes a static or dynamic image within an Imaging Area. Examples of such Image Capture Devices (40) include video or thermal cameras, distance capture devices, and other devices that allow the assembly of a representative image of the surroundings within the Imaging Area, including the Gated Area (GA).

The User Category Window (311, 312, 313) that accompanies the movement of the user (Authorized User [AU], Unauthorized User [UU] or Special User [SU]) within the Gated Area (GA) identifies the user category thereby facilitating the identification and category of the user (Authorized User [AU], Unauthorized User [UU] or Special User [SU]) for security agents and/or gatehouse staff to, if necessary, take action. For example, the movement of an Unauthorized User (UU) within the Gated Area (GA) promotes the combined movement of the respective User Category Window (312) for the Unauthorized User (UU) in a color stipulated to such a category, so that the security officers can quickly identify this Unauthorized User (UU) and perform a possible approach or another stipulated procedure.

In a preferred configuration, a Blocking Device (50) is placed at the entrance to the Restricted Area (RA). This Blocking Device (50) is wholly or partially closed by commands from the Processing Unit (10) to prevent the passage of an Unauthorized Users (UU) or certain kinds of Special Users (SU) to the Restricted Area (RA). When Authorized Users (AU) are passing within the Gated Area (GA), the Blocking Device (50) is maintained by the Processing Unit (10) in the open position, thereby allowing the free flow of such users into the Restricted Area (RA).

Optionally, the Blocking Device (50) can be removed. In this case, an Unauthorized User's (UU) access to the Restricted Area (RA) would have to be prevented by security agents based on the visual identification provided by the User Category Window (312) characteristic for an Unauthorized User (UU).

The Blocking Device (50) includes any device usually used to restrict user flows such as turnstiles, blockers, sliding doors, swing gates/doors and the like.

As shown in Figure 6, when an Unauthorized User (UU) moves into the Gated Area (GA) right behind an Authorized User (AU) or a Special User (SU), the respective User Category Windows (312 for Unauthorized User [UU], 311 for Authorized user [AU] and 313 for Special user [SU]) are activated in the Bar of Luminous Elements (31) of the Barriers (30), in order to signal the category of each one of the users. The Processing Unit (10), based on data received from the Image Capture Device (40) and processed by the Processing Unit (10), activates the Blocking Device (50) which starts to partially close or fully block the flow of an Unauthorized User (UU) as such a user approaches the Blocking Device (50), thereby blocking the passage only for the Unauthorized User (UU) and allowing the entry into the Restricted Area (RA) only for Authorized Users (AU) and Special Users (SU). The closing or opening speed of the Blocking Device (50) can be variable in proportion to the location, speed and direction of movement of an Unauthorized User (UU). For example, as an Unauthorized User (UU) approaches the Restricted Area (RA), the Blocking Device (50) will close more slowly if the Unauthorized User is moving slowly within the Gated Area (GA) and more quickly if the Unauthorized User (UU) moves faster within the gated Area (GA). Conversely, the Blocking Device (50) will start opening more slowly or quickly as the Unauthorized User (UU) moves away from the Restricted Area (RA) at a, respectively, slower or faster pace.

The Processing Unit (10) may also record and store by electronic means any event, based on previously established rules, making it possible, for example, to record the time of entry, speed of entry, dwell time and forced entry attempts by Unauthorized Users (UU), or even identify objects left inside the Gated Area (GA). These events, which are stored for future reference, can also alert security officers, so that they can take appropriate action.

Optionally, the User Authentication Device (20) can be removed, so that the Image Capture Device (40) in conjunction with the Processing Unit (10) can validate an object by way of geometric relationships of features of that object to determine if the object can be authorized, or not, to enter a Restricted Area (RA), thereby activating the Bar of Luminous Elements (31) to configure the respective User Category Window (311, 312 or 313).

Optionally, contiguous to the Gated Area (GA) can be created an area where Unauthorized User (UU) can be quarantined by security agents, thereby avoiding flow restrictions or stoppages in the Gated Area (GA).

Optionally, the control and monitoring system and method for access to a restricted area can be used for counting. In this condition, the User Authentication Device (20), the Blocking Device (50) and the Bar of Luminous Elements (31) in the barrier (30) can be suppressed. As a counter, the Image Capture Device (40) identifies the user's passage through the Gated Area (GA) and the Processing Unit (10) performs the counting functions.

Optionally, the control and monitoring system and method for access to a restricted area can be used for animal sorting, categorizing by physical attributes, through recognition or identification devices, such as, but not limited to, earrings with bar codes, among others. In this situation, the Image Capture Device (40) identifies the animal through, for example, the reading of an earring identifier, and sends a signal to the Processing Unit (10) that triggers the respective indicative window stipulated for its category, following the movement of the animal within the Gated Area (GA), allowing the identification of, for example, females/males, vaccinated/unvaccinated animals, and other conditions. Depending of the category of animal identified, the Blocking Device (50), can be used to divert such animals into their respective segregation areas, according rules previously programmed in the Processing Unit (10).

## Claims

1. A system for controlling and monitoring the access to a restricted area comprising:
- a Gated Area (GA), immediately before the Restricted Area (RA), said Gated Area (GA) being limited by Barriers (30) fitted with Bars of Luminous Elements (31), which are activated by a Processing Unit (10) ;
- the Processing Unit (10) being configured to receive authentication and user category information from a User Authentication Device (20) and, wherein above the Gated Area (GA)
- is an Image Capture Device (40), which is configured to constantly identify the presence of one or more users within the Gated Area (GA), and to send this information to the Processing Unit (10),
- said Processing Unit (10) in turn is configured to calculate the position, speed and direction of movement of the user(s) within the Gated Area (GA), and the gathered information is used to activate a User Category Window (311,312,313) by way of the Bars of Luminous Elements (31) located in the Barriers (30) in a colour stipulated for each user category, namely Authorized User (AU) with a specific User Category Window (311) colour, Unauthorized User (UU) with another Specific User Category Window (312) colour and Special Users (SU) with another specific User Category Window (313) colour, and
- wherein said User Category Windows (311, 312, 313) follow the movement of their respective user within the Gated Area (GA), based on information received from the Image Capture Device (40) and processed by the Processing Unit (10);
- a Blocking Device (50) configured to be partially or fully closed, or opened, by the Processing Unit (10), based on data received by the Image Capture Device (40) and processed by the Processing Unit (10), and
- the access to the Restricted Area (RA) for an Unauthorized User (UU) being prevented by fully or partially closing the Blocking Device (50), wherein said access is permitted to the Restricted Area (RA) for an Authorized User (AU) and/or a Special User (SU) by maintaining the Blocking Device (50) in the open position.

2. A system, according to claim 1, wherein the Bar of Luminous Elements (31) is equipped with light-emitting diodes (LEDs), laser beams, lamps, or luminous displays of the LCD *(Liquid Crystal Display),* plasma or LED type devices.

3. A system, according to claim 1, wherein the User Authentication Device (20) comprises a device enabling the identification of a user by way of biometric identification elements such as fingerprint, iris, face or palm of the hand, and/or non-biometric identification elements, such as magnetic stripe of barcode badges, RFID badges, and/or tags.

4. A system, according to claim 1, wherein the Image Capture Device (40) is configured to recognize a static or dynamic image in an Imaging Area, the Image Capture Device comprising video or thermal cameras, distance capture devices or any other devices that allows the assembly of a representative image of the surroundings within the Imaging Area, including within the Gated Area (GA).

5. A system, according to claim 1, wherein the Blocking Device (50), controlled by the Processing Unit (10),
- is configured to be closed partially or fully and at a variable speed depending on: a) the speed of the Unauthorized User (UU) moving within the Gated Area (GA) in a direction towards the Restricted Area (RA); and b) the position of the Unauthorized User (UU) within the Gated Area (GA) and
- to be opened partially or fully and at a variable speed depending on a) the speed of the Unauthorized User (UU) moving within the Gated Area (GA) in a direction away from the Restricted Area (RA); and b) the position of the Unauthorized User (UU) within the Gated Area (GA) and
wherein the Processing Unit (10), based on constantly updated presence information received from the Image Capture Device (40), is configured to electronically calculate the speed, position and direction of movement of the Unauthorized User (UU).

6. A system, according to claim 1, wherein the Image Capture Device (40) in conjunction with the Processing Unit (10) is configured to validate an object by way of geometric relationships of features of that object to determine if the object can be authorized, or not, to enter the Restricted Area (RA), thereby activating the Bar of Luminous Elements (31) to configure the respective User Category Window (311, 312 or 313).

7. A method for controlling and monitoring the access to a restricted area performed by the system of claim 1 and comprising the following steps:
a) User identifies himself, or not, at the User Authentication Device (20) located at the entrance of the Gated Area (GA);
b) In the case of the user having identified himself, user authentication and user category are sent, by the User Authentication Device (20) to the Processing Unit (10), and
c) the Processing Unit (10) receives, a valid authentication and the respective user category of the user;
d) The Image Capture Device (40) identifies the presence of the user within the Gated Area (GA) and constantly sends information about the presence of the user to the Processing Unit (10), the gathered information being used by the Processing Unit (10) to calculate the position, speed and direction of movement of the user within the gated Area (GA);
e) With information on a valid, or invalid authentication, and user category, as well as user speed, user position and user direction of movement, the Processing Unit (10) activates a User Category Window (311, 312, 313) in a colour stipulated for that user category: Authorized User (AU) with a specific User Category Window (311), Unauthorized User (UU) with another specific User Category Window (312), and Special User (SU) with another specific User Category Window (313) and the User Category Window (311, 312, 313) is formed by Bars of Luminous Elements (31) arranged in the Barriers (30) limiting the Gated Area (GA);
f) User Category Windows (311, 312, 313) follow the movement of the corresponding Authorized Users (AU), Unauthorized Users (UU) and/or Special User (SU) within the Gated Area (GA), based on information received by the Image Capture Device (40) and processed by the Processing Unit (10);
g) The user entry to the Restricted Area (RA) is allowed, or not, by a Blocking Device (50) activated by the Processing Unit (10).

8. A method, according to claim 7 wherein when an Authorized User (AU), Unauthorized User (UU) or Special User (SU) located within the Gated Area (GA) - first user - overtakes, by moving forwards or backwards within the Gated Area (GA), any other user (AU, UU or SU) - second user-, also located within the Gated Area (GA), the corresponding User Category Windows (311,312,313) of the first user and that of the second user will continue to follow the corresponding user during and after the overtaking process.

## Patentansprüche

1. Ein System zur Kontrolle und Überwachung des Zuganges in ein Sperrgebiet umfassend:
- einen abgeschlossenen Bereich (GA), direkt vor dem Sperrgebiet (RA) genannter abgeschlossener Bereich (GA) eingeschränkt durch Schranken (30) eingebaut mit Leuchtkörperstreifen (31), welche durch eine Verarbeitungseinheit (10) aktiviert werden;
- die Verarbeitungseinheit (10) gestaltet wird, um Information zu Authentifizierung und Benutzerkategorie von einem Benutzer-Authentifizierungsgerät (20) zu erhalten und, wobei oberhalb des abgeschlossenen Bereiches (GA)
- ist ein Bilderfassungsgerät (40) so gestaltet, um die Anwesenheit von einem oder mehreren Benutzern innerhalb des abgeschlossenen Bereiches (GA) ständig zu erkennen und um diese Information an die Verarbeitungseinheit (10) zu senden,
- genannte Verarbeitungseinheit (10) wiederum gestaltet, um die Position, Geschwindigkeit und Richtung der Bewegung der Benutzer innerhalb des abgeschlossenen Bereiches (GA) zu kalkulieren, und die gesammelte Information ist verwendet, um ein Benutzerkategoriefenster (311, 312, 313) zu aktivieren, mittels der Leuchtkörperstreifen (31) gestellt in den Schranken (30) in einer Farbe festgelegt für jede Benutzerkategorie, nämlich Befugter Benutzer (AU) mit einem farblich bestimmten Benutzerkategoriefenster (311), Unbefugter Benutzer (UU) mit einem anderen farblich Bestimmten Benutzerkategoriefenster (312) und Sonderbenutzer (SU) mit einem anderen farblich bestimmten Benutzerkategoriefenster (313), und
- wobei genannte Benutzerkategoriefenster (311, 312, 313) die Bewegung der entsprechenden Benutzer innerhalb des abgeschlossenen Bereiches (GA) folgen, beziehend auf Information erhalten vom Bilderfassungsgerät (40) und verarbeitet durch die Verarbeitungseinheit (10);
- ein Sperrgerät (50) gestaltet, um teils oder völlig geschlossen zu sein, oder offen, mittels der Verarbeitungseinheit (10), beziehend auf erhaltenen Data mittels des Bilderfassungsgerät (40) und verarbeitet mittels der Verarbeitungseinheit (10), und
- den Zugang zum abgeschlossenen Bereich (RA) für einen Unbefugten Benutzer (UU) verhindert durch völlig oder teils geschlossenem Sperrgerät (50), wobei genannter Zugang zum Sperrgebiet (RA) für einen Befugten Benutzer (AU) und/ oder einen Sonderbenutzer (SU) erlaubt ist, in dem das Sperrgerät (50) in die offene Position beibehalten wird.

2. Ein System gemäß Anspruch 1, wobei der Leuchtkörperstreifen (31) mit Leuchtdioden (LEDs), Laserstrahlen, Lampen oder Leuchtanzeigen der LCD *(Liquid Crystal Display),* Plasma oder LED-ähnlichen Geräten ausgestattet ist.

3. Ein System gemäß Anspruch 1, wobei das Benutzer-Authentifizierungsgerät (20) ein Gerät umfasst, das die Identifikation eines Benutzers mittels biometrischen Ausweiselementen wie Fingerabdruck, Iris, Gesicht oder Handfläche und/ oder nicht-biometrischen Ausweiselementen wie Magnetstreifen aus Strichcode-Plaketten, RFID-Plaketten und/ oder Schilder ermöglicht.

4. Ein System gemäß Anspruch 1, wobei das Bilderfassungsgerät (40) gestaltet ist, um ein statisches oder dynamisches Bild in einem Bildbereich zu erkennen, das Bilderfassungsgerät umfassend Video- oder Wärmekameras, Abstandserfassungsgeräte oder andere Geräte, welches die Aufstellung eines darstellenden Bildes der Umgebungen innerhalb des Bildbereiches, einschließlich innerhalb des abgeschlossenen Bereiches (GA) .

5. Ein System gemäß Anspruch 1, wobei das Sperrgerät (50), kontrolliert mittels einer Verarbeitungseinheit (10),
- gestaltet ist, teils oder völlig geschlossen zu sein und bei einer regelbaren Geschwindigkeit abhängend von: a) der Geschwindigkeit des Unbefugten Benutzers (UU) sich bewegend innerhalb des abgeschlossenen Bereiches (GA) in Richtung des Sperrgebietes (RA); und b) der Position des Unbefugten Benutzers (UU) innerhalb des abgeschlossenen Bereiches (GA) und
- teils oder völlig geöffnet zu werden und bei einer regelbaren Geschwindigkeit abhängend von: a) der Geschwindigkeit des Unbefugten Benutzers (UU) sich bewegend innerhalb des abgeschlossenen Bereiches (GA) in Richtung entfernt vom Sperrgebiet (RA); und b) der Position des Unbefugten Benutzers (UU) innerhalb des abgeschlossenen Bereiches (GA) und
wobei die Verarbeitungseinheit (10), beziehend auf ständig aktualisierter Anwesenheitsinformation erhalten vom Bilderfassungsgerät (40), gestaltet ist, um die Geschwindigkeit, Position und Richtung der Bewegung des Unbefugten Benutzers (UU) elektronisch zu berechnen.

6. Ein System gemäß Anspruch 1, wobei das Bilderfassungsgerät (40) zusammen mit der Verarbeitungseinheit (10) gestaltet ist, um ein Gegenstand mittels geometrischen Kenndatenverhältnissen dieses Gegenstandes für gültig zu erklären und zu bestimmen, ob dieser Gegenstand angenommen werden kann oder nicht, das Sperrgebiet (RA) zu betreten, dadurch betätigend den Leuchtkörperstreifen (31), um das entsprechende Benutzerkategoriefenster (311, 312, 313) zu gestalten.

7. Eine Methode zur Kontrolle und Überwachung des Zuganges in ein Sperrgebiet aufgeführt mittels des Systems von Anspruch 1 und umfassend die folgenden Schritte:
a) Benutzer weist sich aus oder nicht beim Benutzer-Authentifizierungsgerät (20) gestellt am Eingang des abgeschlossenen Bereiches (GA);
b) Falls der Benutzer sich ausgewiesen hat, Benutzerauthentifizierung und Benutzerkategorie werden gesendet, durch das Benutzer-Authentifizierungsgerät (20) an die Verarbeitungseinheit (10), und
c) die Verarbeitungseinheit (10) empfängt eine gültige Authentifizierung und die entsprechende Benutzerkategorie des Benutzers;
d) Das Bilderfassungsgerät (40) weist die Anwesenheit des Benutzers innerhalb des abgeschlossenen Bereiches (GA) aus und sendet der Verarbeitungseinheit (10) ständig Information über die Anwesenheit des Benutzers, in dem die gesammelte Information verwendet durch die Verarbeitungseinheit (10) die Position, Geschwindigkeit und Richtung der Bewegung des Benutzers innerhalb des abgeschlossenen Bereiches (GA) zu berechnen;
e) Mit Information über eine gültige oder ungültige Authentifizierung und Benutzerkategorie, sowie auch Benutzergeschwindigkeit, Benutzerposition und Benutzerrichtung einer Bewegung, aktiviert die Verarbeitungseinheit (10) ein Benutzerkategoriefenster (311, 312, 313) in einer festgesetzten Farbe für diese Benutzerkategorie: Befugter Benutzer (AU) mit einem bestimmten Benutzerkategoriefenster (311), Unbefugter Benutzer (UU) mit anderem bestimmten Benutzerkategoriefenster (312) und Sonderbenutzer (SU) mit anderem bestimmten Benutzerkategoriefenster (313), und das Benutzerkategoriefenster (311, 312, 313) mittels Leuchtkörperstreifen (31) gestaltet ist, angeordnet in den Schranken (30) begrenzend den abgeschlossenen Bereich (GA);
f) Benutzerkategoriefenster (311, 312, 313) folgen der Bewegung der entsprechenden Befugten Benutzer (AU), Unbefugten Benutzer (UU) und/oder Sonderbenutzer (SU) innerhalb des abgeschlossenen Bereiches (GA), beziehend auf Information erhalten mittels des Bilderfassungsgerätes (40) und verarbeitet durch die Verarbeitungseinheit (10);
g) Der Benutzereingang zum Sperrgebiet (RA) ist Befugt, oder nicht, mittels eines Sperrgerätes (50) aktiviert durch die Verarbeitungseinheit (10).

8. Eine Methode gemäß Anspruch 7, wobei, wenn ein Befugter Benutzer (AU), Unbefugter Benutzer (UU) oder Sonderbenutzer (SU) gestellt innerhalb des abgeschlossenen Bereiches (GA) - erster Benutzer - einholt, mittels Vorwärts- oder Rückwärtsbewegung innerhalb des abgeschlossenen Bereiches (GA), ein anderer Benutzer (AU, UB oder SU) - zweiter Benutzer -, auch innerhalb des abgeschlossenen Bereiches (GA) gestellt, die entsprechenden Benutzerkategoriefenster (311, 312, 313) des ersten Benutzer und die des zweiten Benutzers weiterhin den entsprechenden Benutzer während und nach dem Einholverfahren folgen.

## Revendications

1. Système pour le contrôle et la surveillance de l'accès à une zone réservée, comprenant :
- une Zone Clôturée (GA), immédiatement avant la Zone Réservée (RA), ladite Zone Clôturée (GA) étant limitée par des Barrières (30) équipées de Barres d'Éléments Lumineux (31) activées par une Unités de traitement (10) ;
- L'Unité de Traitement (10) étant configurée afin de recevoir une authentification et une information sur la catégorie d'utilisateur d'un Dispositif d'Authentification d'Utilisateur (20) et, où la Zone Clôturée (GA) ci-dessus
- est un Dispositif de Capture d'Image (40), configuré pour identifier constamment la présence d'un ou de plusieurs utilisateurs dans la Zone Clôturée (GA) et envoyer cette information à l' Unité de Traitement (10),
- ladite Unité de Traitement (10), à son tour, est configurée pour calculer la position, la vitesse et la direction du mouvement de(s) l'utilisateur(s) dans la Zone Clôturée (GA) et l'information recueillie est utilisée pour activer une Fenêtre de la Catégorie d'Utilisateur (311,312,313) au moyen de Barres d'Éléments Lumineux (31) situées dans les Barrières (30) dans une couleur stipulée pour chaque catégorie d'utilisateur, notamment un Utilisateur Autorisé (AU) ayant une couleur de Fenêtre de Catégorie d'Utilisateur (311), un Utilisateur non Autorisé (UU) ayant une autre couleur de Fenêtre de Catégorie d'Utilisateur Spécifique (312) et des Utilisateurs Spéciaux (SU) avec une autre couleur de Fenêtre de Catégorie d'Utilisateur spécifique (313), et
- où lesdites Fenêtres de Catégorie d'Utilisateur (311, 312, 313) suivent le mouvement de leur utilisateur respectif dans la Zone Réservée (GA), sur le fondement de l'information reçue du Dispositif de Capture d'Image (40) et traitée par l' Unité de Traitement (10) ;
- un Dispositif de Blocage (50) configuré en vue d'être partiellement ou entièrement fermé, ou ouvert par l' Unité de Traitement (10), sur le fondement des données reçues par le Dispositif de Capture d'Image (40) et traitées par l' Unité de Traitement (10), et
- l'accès à la Zone Réservée (RA) pour un Utilisateur non Autorisé (UU) étant évité par une fermeture complète ou partielle du Dispositif de Blocage (50), où ledit accès est permis à la Zone Réservée (RA) pour un Utilisateur non Autorisé (AU) et/ou un Utilisateur Spécial (SU) en maintenant le Dispositif de blocage (50) sur la position ouverte.

2. Système, selon la revendication 1, où la Barre d'Éléments Lumineux (31) est équipée de diodes électroluminescentes (LEDs), de faisceaux laser, de lampes ou d'écrans lumineux du LCD *(Ecran à Cristaux Liquides*), dispositifs de type LED ou plasma.

3. Système, selon la revendication 1, où le Dispositif d'Authentification d'Utilisateur (20) comprend un dispositif permettant l'identification d'un utilisateur au moyen d'éléments d'identification biométriques tels que l'empreinte digitale, l'iris, le visage ou la paume de la main et/ou d'éléments d'identification non-biométriques, tels que la bande magnétique de badges à code-barres, de badges RFID et/ou d'étiquettes.

4. Système, selon la revendication 1, où le Dispositif de Capture d'Image (40) est configuré de manière à reconnaître une image dynamique ou statique dans une Zone d'imagerie, le Dispositif de capture d'image comprenant des caméras vidéo ou thermiques, des dispositifs de capture à distance ou tout autre dispositif permettant l'assemblage d'une image représentative des alentours dans la Zone d'imagerie, y compris la Zone Cloturee (GA) .

5. Système, selon la revendication 1, où le Dispositif de Blocage (50), contrôlé par l'Unité de Traitement (10),
- est configuré en vue d'être fermé partiellement ou complètement et à une vitesse variable selon : a) la vitesse de l' Utilisateur non Autorisé (UU) se déplaçant dans la Zone Clôturée (GA) en direction de la Zone Réservée (RA) ; et b) la position de l'Utilisateur non Autorisé (UU) dans la Zone Clôturée (GA) et
- à ouvrir partiellement ou complètement et à une vitesse variable selon a) la vitesse de l'Utilisateur non Autorisé (UU) se déplaçant dans la Zone Clôturée (GA) en direction en dehors de la Zone Réservée (RA) ; et b) la position de l'Utilisateur non Autorisé (UU) dans la Zone Clôturée (GA) et
où l' Unité de Traitement (10), basée sur une information de présence constamment mise à jour reçue du Dispositif de Capture d'Image (40) est configurée pour calculer électroniquement la vitesse, la position et la direction du mouvement de l' Utilisateur non autorisé (UU).

6. Système, selon la revendication 1, où le Dispositif de Capture d'Image (40) en conjonction avec l'Unité de Traitement (10) est configuré pour valider un objet au moyen de relations géométriques de caractéristiques de cet objet afin de déterminer si l'objet peut être autorisé ou pas, à entrer dans la Zone Réservée (RA), activant ainsi la Barre d'Éléments Lumineux (31) pour configurer la respective Fenêtre de Catégorie d'Utilisateur (311, 312 or 313).

7. Méthode de contrôle et de surveillance de l'accès à une zone réservée, réalisée par le système de la revendication 1 et comprenant les étapes suivantes :
a) L'utilisateur s'identifie lui-même ou pas, au niveau du Dispositif d'Authentification de l'Utilisateur (20) situé à l'entrée de la Zone Clôturée (GA) ;
b) Si l'utilisateur s'est identifié lui-même, l'authentification de l'utilisateur et la catégorie de l'utilisateur sont envoyés par le Dispositif d'Authentification de l'Utilisateur (20) à l'Unité de Traitement (10) et
c) L'Unité de Traitement (10) reçoit une authentification valide et la respective catégorie d'utilisateur de l'utilisateur ;
d) Le Dispositif de Capture d'Image (40) identifie la présence de l'utilisateur dans la Zone Clôturée (GA) et envoie constamment des informations sur la présence de l'utilisateur de l'Unité de Traitement (10), l'information recueillie étant utilisée par l'Unité de Traitement (10) pour calculer la position, la vitesse et la direction du mouvement de l'utilisateur dans la Zone Clôturée (GA) ;
e) Avec l'information sur une authentification valide ou invalide et la catégorie de l'utilisateur, ainsi que la vitesse de l'utilisateur, la position de l'utilisateur et la direction de l'utilisateur du mouvement, l' Unité de Traitement (10) active une Fenêtre de Catégorie d'Utilisateur (311, 312, 313) dans une couleur stipulée pour cette catégorie d'utilisateur : Utilisateur Autorisé (AU) avec une Fenêtre de Catégorie d'Utilisateur spécifique (311), un Utilisateur non Autorisé (UU) avec une autre Fenêtre de Catégorie d'Utilisateur Spécifique (312) et un Utilisateur Spécial (SU) avec une autre Fenêtre de Catégorie d'Utilisateur spécifique (313) et la Fenêtre de Catégorie d'Utilisateur (311, 312, 313) est formé de Barres d'Éléments Lumineux (31) arrangées dans des Barrières (30) qui limitent la Zone Clôturée (GA) ;
f) où lesdites Fenêtres de Catégorie d'Utilisateur (311, 312, 313) suivent le mouvement des Utilisateurs Autorisés correspondants (AU), des Utilisateurs non Autorisés (UU) et/ou Utilisateur Spécial (SU) dans la Zone Clôturée (GA), sur la base de l'information reçue du Dispositif de Capture d'Image (40) et traitée par l' Unité de Traitement (10) ;
g) L'entrée de l'utilisateur dans la Zone Réservée (RA) est permise ou pas, par un Dispositif de Blocage (50) activé par l'Unité de Traitement (10).

8. Méthode, selon la revendication 7 où lorsque un Utilisateur Autorisé (AU), un Utilisateur non Autorisé (UU) ou un Utilisateur Spécial (SU) situé dans une Zone Clôturée (GA) - premier utilisateur - dépasse en se déplaçant ver l'avant ou vers l'arrière dans une Zone Clôturée (GA), tout autre utilisateur (AU, UU ou SU) - second utilisateur -, également situé dans la Zone Clôturée (GA), les Fenêtres de Catégorie d'Utilisateur correspondantes (311,312,313) du premier utilisateur et que le second utilisateur continuera de suivre le correspondant utilisateur pendant et après le processus de dépassement.
